# EUROPEAN PATENT APPLICATION

(11) **EP 4 564 264 A1**
(43) Date of publication of application: **04.06.2025**
(21) Application number: 24216072.9
(22) Date of filing: 28.11.2024
(51) Int. Cl.: G06Q 20/10, G06Q 20/18, G06Q 20/40, G07F 19/00

(54) **METHOD OF OPERATING A FINANCIAL TRANSACTION PROCESSING SYSTEM**

(30) Priority: 28.11.2023 US 202363603272 P
(71) Applicant: Diebold Nixdorf Incorporated, North Canton, Ohio 44720 (US)
(72) Inventor: TEAGUE, Ross, North Canton, 44720 (US)
(74) Representative: Viering, Jentschura & Partner mbB Patent- und Rechtsanwälte

(57) **Abstract**

A method of operating a financial transaction processing system can include receiving, at a server computing device of the system, a definition of at least one transaction function from a user that is physically remote from the server computing device. The transaction function can include at least an account associated with a financial transaction, an amount associated with the transaction, and an alphanumeric designation of the transaction function. The method can also include storing, in a memory of the system, the definition of the transaction function. The server computing device can receive, from an automated transaction machine of the system, the alphanumeric designation and then retrieve from the memory the transaction function in response. The server computing device can then transmit an output to the automated transaction machine being a command correlated at least in part to the definition and directing the automated transaction machine to dispense the amount.

## Description

### CROSS-REFERENCE TO RELATED APPLICATIONS

This application claims the priority benefit of United States Provisional Patent Application Serial No. 63/603,272 for a METHOD OF OPERATION FOR A TRANSACTION PROCESSING SYSTEM AND AN AUTOMATED TRANSACTION MACHINE, filed on November 28, 2023, which is hereby incorporated by reference in its entirety.

### BACKGROUND

### 1. Field

The present disclosure relates to systems for processing financial transactions, such as those including automated transaction machines (ATMs).

### 2. Description of Related Prior Art

An ATM is an electronic telecommunications and computing device that enables account holders of a financial institution to perform transactions, such as cash withdrawal, check deposit and account balance inquiries, without the need for a human bank teller. The ATM includes a processor and memory. The processor executes an operating system during operation. It has been estimated that there are over three million ATMs installed throughout the world. During a transaction, by way of example, the account holder identifies himself/herself by first inserting a plastic card into the ATM of a financial institution. The card contains a magnetic stripe or a chip that contains accountidentification information. Secondary or "personal" authentication information is then provided by the account holder by entering a personal identification number (PIN) which must match the PIN stored in the financial institution's database.

The background description provided herein is for the purpose of generally presenting background context of the disclosure. Work of the presently named inventor, to the extent it is described in this background section, as well as aspects of the description that may not otherwise qualify as prior art at the time of filing, are neither expressly nor impliedly admitted as prior art against the present disclosure.

### SUMMARY

This section provides a simplified summary in order to provide a basic understanding of some aspects described herein. This summary is not an extensive overview and is not intended to identify "key" or "critical" elements of the present disclosure or to delineate the scope of the various aspects described herein. The purpose of this portion of the document is to present some concepts in a simplified form as a prelude to the more detailed description that is presented later.

A method of operating a financial transaction processing system can include receiving, at a server computing device of the financial transaction processing system, a definition of at least one transaction function from a user that is physically remote from the server computing device. The at least one transaction function can include at least (i) an account associated with a financial transaction and (ii) an amount associated with the financial transaction and (iii) an alphanumeric designation of the at least one transaction function. The method can also include storing, in a memory of the financial transaction processing system, by the server computing device, the definition of the at least one transaction function. The method can also include receiving, at the server computing device, from an automated transaction machine of the financial transaction processing system, the alphanumeric designation of the at least one transaction function. The method can also include retrieving, from the memory of the financial transaction processing system, with the server computing device, the at least one transaction function in response to the receiving the alphanumeric designation. The method can also include transmitting, with the server computing device, to the automated transaction machine, an output being a command correlated at least in part to the definition of the at least one transaction function and directing the automated transaction machine to dispense the amount associated with the financial transaction.

According to other features, the method can also include executing the command with the automated transaction machine. The executing can further comprise dispensing, with the automated transaction machine, the amount associated with the financial transaction in response the receiving the command and without the user indicating the amount of currency to the automated transaction machine.

In other features, the method can also include receiving, with the automated transaction machine, authentication data associated with the user one of prior to the receiving the alphanumeric designation of the at least one transaction function at the server computing device. The action of receiving the alphanumeric designation of the at least one transaction function at the server computing device can further comprise receiving, at the server computing device, from the automated transaction machine of the financial transaction processing system, the alphanumeric designation of the at least one transaction function and the authentication data. The method can further comprise comparing, with the server computing device, after the retrieving, the amount associated with the financial transaction and the account associated with the financial transaction prior to the transmitting the output to the automated transaction machine with the server computing device, wherein the transmitting is responsive in part to the comparing.

According to additional features, the method can further comprise soliciting, with the automated transaction machine, authentication data and the alphanumeric designation of the at least one transaction function from the user prior to the receiving of the alphanumeric designation of the at least one transaction function at the server computing device. The method can further comprise executing the command with the automated transaction machine after the soliciting and without receiving other information from the user after the receiving the alphanumeric designation of the at least one transaction function at the server computing device. The soliciting can be further defined as soliciting, with the automated transaction machine, concurrently, the authentication data and the alphanumeric designation of the at least one transaction function from the user prior to the receiving the alphanumeric designation of the at least one transaction function at the server computing device. The soliciting can be further defined as soliciting, with the automated transaction machine, concurrently through a first screen displayed by a display screen of the automated transaction machine, the authentication data and the alphanumeric designation of the at least one transaction function from the user prior to the receiving the alphanumeric designation of the at least one transaction function at the server computing device. The soliciting can be further defined as soliciting, with the automated transaction machine, only the authentication data and the alphanumeric designation of the at least one transaction function from the user prior to the receiving the alphanumeric designation of the at least one transaction function at the server computing device.

According to other features, the method of claim can further comprise soliciting, with the automated transaction machine, authentication data from the user prior to the receiving the alphanumeric designation of the at least one transaction function at the server computing device. The method can further comprise receiving, with the automated transaction machine, after the soliciting, a confirmation of the authentication data from the server computing device. The method can further comprise receiving, with the automated transaction machine, after the receiving the authentication data from the server computing device, the alphanumeric designation of the at least one transaction function from the user. The method can further comprise executing the command with the automated transaction machine after the receiving the alphanumeric designation of the at least one transaction function from the user without receiving an amount of currency from the user. The executing can be further defined as executing the command with the automated transaction machine after the receiving the alphanumeric designation of the at least one transaction function from the user without receiving information from the user other than the authentication data and the alphanumeric designation of the at least one transaction function.

In other features, the method can further comprise soliciting, with the automated transaction machine, authentication data from the user prior to the receiving the alphanumeric designation of the at least one transaction function at the server computing device. The method can further comprise receiving, with the automated transaction machine, after the soliciting, a confirmation of the authentication data from the server computing device. The method can further comprise displaying, with a display screen of the automated transaction machine, in response to the receiving the confirmation, a plurality of graphical user interface elements each representing one of a plurality of transactions, wherein one of the plurality of graphical user interface elements permits entry of the alphanumeric designation of the at least one transaction function.

A method of operating a server for performing a financial transaction can include receiving from a user a financial transaction defined by a plurality of variables including at least the nature of the financial transaction, the account against which the financial transaction will be recorded, and the amount of the financial transaction, and an associated alphanumeric designation. The method can also include storing the financial transaction and associated alphanumeric designation in memory. The method can also include, subsequent to the storing, receiving a request from an automated transaction machine (ATM) to initiate the financial transaction based at least in part on user identifiable data and the associated alphanumeric sequence. The method can also include initiating the financial transaction with the server.

According to additional features, the financial transaction includes a withdrawal and where the initiating includes sending a dispense authorization to the ATM.

According to other features, the financial transaction includes a transfer and where the initiating includes sending funds from the account against which the financial transaction will be recorded, to another account against which the transfer will be credited, the other account included in the plurality of variables received from the user.

In other features, the financial transaction includes crediting funds to the account against which the financial transaction will be recorded, and the method can further include receiving verification from the ATM of a deposit, the amount of the deposit included in the plurality of variables received from the user.

A method of operating an automated transaction machine (ATM) for performing a financial transaction can include initiating a user session based upon user identifiable data. The method can also include, subsequent to the initiating, receiving from the user an alphanumeric sequence. The method can also include transmitting the alphanumeric sequence to a server associated with a financial institution. The method can also include receiving from the server confirmation of an association between the alphanumeric sequence and a financial transaction defined by a plurality of variables including at least the nature of the financial transaction, the account against which the financial transaction will be recorded, and the amount of the financial transaction.

According to additional features, the method can further comprise dispensing cash in accordance with the pre-defined financial transaction.

According to other features, the method can further comprise receiving a deposit in accordance with the pre-defined financial transaction.

### BRIEF DESCRIPTION OF THE DRAWINGS

The detailed description set forth below references the following drawings:
Figure 1 is a functional block diagram of an exemplary ATM according to one or more implementations of the present disclosure;
Figure 2 is a functional block diagram of an exemplary financial transaction computing system according to one or more implementations of the present disclosure;
Figure 3 is a first screen of indicia presented to a user of an ATM through a display of the ATM during the execution of a first financial transaction;
Figure 4 is a second screen of indicia presented to the user of the ATM through the display of the ATM during the execution of the first financial transaction after the user has entered data to the ATM when the first screen shown in Figure 3 is being presented;
Figure 5 is a third screen of indicia presented to the user of the ATM through the display of the ATM during the execution of the first financial transaction after the user has entered data to the ATM when the second screen shown in Figure 4 is being presented;
Figure 6 is a fourth screen of indicia presented to the user of the ATM through the display of the ATM during the execution of the first financial transaction after the user has entered data to the ATM when the third screen shown in Figure 5 is being presented;
Figure 7 is a fifth screen of indicia presented to the user of the ATM through the display of the ATM during the execution of the first financial transaction after the user has entered data to the ATM when the fourth screen shown in Figure 6 is being presented;
Figure 8 is a sixth screen of indicia presented to the user of the ATM through the display of the ATM during the execution of the first financial transaction after the user has entered data to the ATM when the fifth screen shown in Figure 7 is being presented to advise the user that the ATM is processing the requested transaction;
Figure 9 is a seventh screen of indicia presented to the user of the ATM through the display of the ATM during the execution of the first financial transaction after the ATM has completed processing associated with the sixth screen shown in Figure 8 and is ready to complete the requested transaction;
Figure 10 is a first screen of indicia presented to a user of the ATM through the display of the ATM during the execution of a second financial transaction;
Figure 11 is a first updated version of the first screen shown in Figure 10 after the user has entered data to the ATM;
Figure 12 is a second updated version of the first screen shown in Figure 11 after the user has entered additional data to the ATM; and
Figure 13 is a simplified activity or "swim lanes" diagram according to one or more implementations of the present disclosure.

### DETAILED DESCRIPTION

The present disclosure, as demonstrated by the exemplary embodiments described below, provides an enhanced method of operating an ATM as well as a system that processes financial transactions. The enhanced method reduces the overall processing operations on computing devices operating within the system including the ATM. A reduction of processing operations results at least in reduced energy consumption, quicker transaction completion times, and improved security since fewer communications between devices and with the user is required.

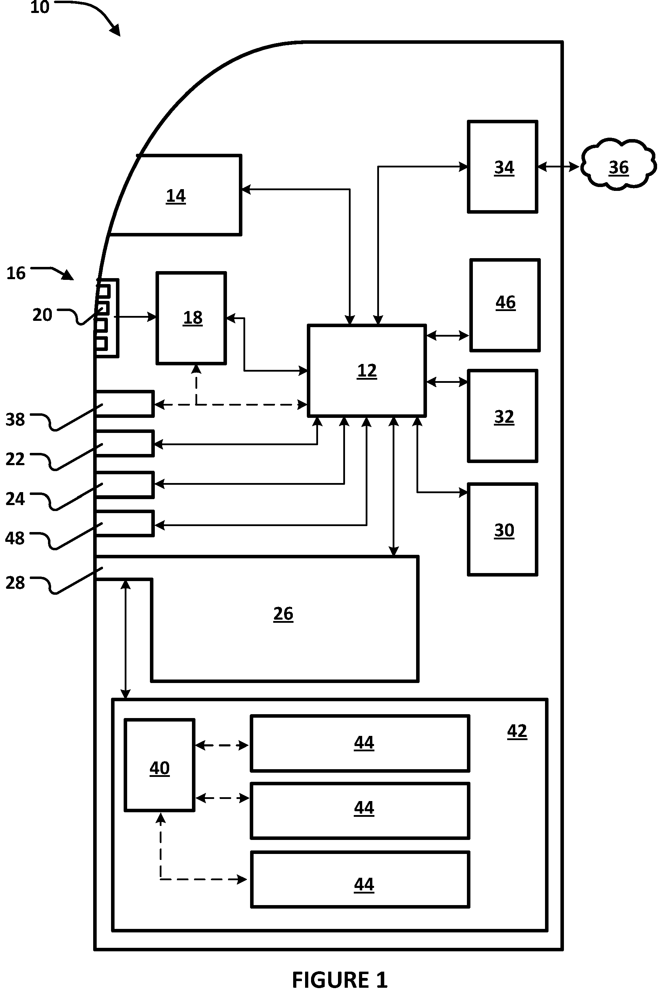

Referring now to the drawings, Figure 1 discloses a functional block diagram of an exemplary ATM 10 according to one or more implementations of the present disclosure. The ATM 10 includes different structures and subsystems for receiving input from a user and executing transactions. The ATM 10 includes a computing device 12. The exemplary computing device 12 has one or more processors and a non-transitory, computer readable medium. The computing device 12 operates under the control of an operating system, kernel and/or firmware and executes or otherwise relies upon various computer software applications, components, programs, objects, modules, data structures, etc. The exemplary computing device 12 can operate under the control of the Windows^{®} operating system. The computer readable medium (memory) of the computing device 12 can include random access memory (RAM) devices comprising the main storage of computing device 12, as well as any supplemental levels of memory, e.g., cache memories, non-volatile or backup memories (e.g., programmable or flash memories), read-only memories, etc. In addition, the memory may be considered to include memory storage physically located elsewhere from RAM in the computing device 12, such as any cache memory in a processor, as well as any storage capacity used as a virtual memory. The computing device 12 can also include one or more mass storage devices, e.g., a floppy or other removable disk drive, a hard disk drive, a direct access storage device (DASD), an optical drive (e.g., a CD drive, a DVD drive, etc.), and/or a tape drive, among others, represented by memory 46.

The exemplary ATM 10 also includes a display 14. The computing device 12 can control the display 14 to present information to the user for furthering completion of the transaction. The display 14 can be a touch screen that allows the user to enter information through the display 14. The exemplary display 14 is configured to transmit any user-entered information to the computing device 12.

The exemplary ATM 10 also includes a key pad 16 and an encryption module 18. Generally, the combination of a key pad and an encryption module are referred to in the art as an encrypted pin pad (EPP). The exemplary key pad 16 includes a plurality of keys, such as key 20. The exemplary encryption module 18 has one or more processors and a non-transitory, computer readable medium. The user can press the keys of the key pad 16 to enter a PIN or other numerical data. It is noted that the may also enter a PIN through the display 14. The key pad 16 is placed in communication with the encryption module 18 and therefore the numbers of the PIN are received by the encryption module 18. It is noted that the communication of the PIN is direct and secure; the PIN cannot be intercepted between the key pad 16 and the encryption module 18. The PIN is then encrypted by the encryption module 18 to define a PIN block. The encryption module 18 includes a network encryption key and applies the network encryption key to encrypt the PIN to the PIN block. The exemplary encryption module 18 is configured to transmit the PIN block to the computing device 12, which can direct the PIN block away from the ATM 10 during the completion of a financial transaction.

The exemplary ATM 10 also includes a card reader 22. The card reader 22 can receive a token from the user, such as a card. The card reader 22 can be configured to execute read and write operations with respect to any storage medium fixed to the user's card. The exemplary card reader 22 can be configured to read data from a magnetic strip on the back of a card or a chip embedded in the card. The exemplary card reader 22 can be configured to transmit any data read from the user's card to the computing device 12, which can direct the data read from the card away from the ATM 10 during completion of a financial transaction. The exemplary card reader 22 can also be configured to receive commands and data from the computing device 12 and change data stored on the user's card.

The exemplary ATM 10 also includes a printer module 24. The computing device 12 can control the printer module 24 to print a receipt when a transaction has been completed. The printer module 24 can communicate one or more messages to the computing device 12, such as a maintenance message regarding the need to refill printer paper.

The exemplary ATM 10 also includes an article exchange unit 26. In the exemplary embodiment, the article exchange unit 26 is configured to receive items such as checks. An exemplary article exchange unit 26 can include a drum on which received items are stored. The exemplary article exchange unit 26 includes a slot 28 open to an exterior of the ATM 10 for the receipt of such items. In other embodiments of the present disclosure, an article exchange unit can be configured to facilitate the receipt of other items, different than paper. The article exchange unit 26 can include one or more sensors and transmit signals from any such sensors to the computing device 12 to execute an exchange. The computing device 12 can control the article exchange unit 26 in response to such signals. For example, the article exchange unit 26 can include a sensor that detects receipt of an item such as a check. The article exchange unit 26 can include a further sensor in the form of a scanner that generates an image of the received item and transmits the image to the computing device 12. When an exchange involves the dispensation of an article to the user, the computing device 12 can control the article exchange unit 26 to dispense the item(s) requested by the user.

The exemplary ATM 10 also includes a printer module 30. The printer module 30 can generate a continuous record of all transactions executed by the ATM 10. The computing device 12 can control the printer module 30 to supplement the record after each transaction has been completed. The printer module 30 can communicate one or more messages to the computing device 12, such as a maintenance message regarding the need to refill printer paper.

The exemplary ATM 10 also includes an access module 32. The access module 32 can be positioned proximate to a rear side of the ATM 10 and spaced from a front side of the ATM 10. The access module 32 can be utilized by service and support technicians. For example, the access module 32 can be utilized by a field engineer to complete software updates to the computing device 12. The access module 32 can also be utilized when non-software updates and maintenance is performed, such as the refilling of printer paper or currency.

The exemplary ATM 10 also includes a transceiver 34. The exemplary transceiver 34 is configured to facilitate communication between the computing device 12 and other computing devices that are distinct from and physically remote from the computing device 12. An example of such a remote computing device is a server computing device, such as a banking or financial institution server communicating with a plurality of ATMs or a switch of the financial network. The exemplary transceiver 34 places the computing device 12 in communication with one or more networks, such as network 36. The network 36 can be a local area network (LAN), a wide area network (WAN) such as the Internet, a Multi-protocol label switching (MPLS) network, a cellular network such as operated by cellular phone companies, a secure financial communications network, or any combination thereof. The network 36 can be a financial/bank network such as NYCE, PULSE, PLUS, Cirrus, AFFN, Interac, Interswitch, STAR, LINK, MegaLink, or BancNet. The transceiver 34 can transmit data and requests for input generated by the computing device 12 and receive responses to these requests, directing these responses to the computing device 12.

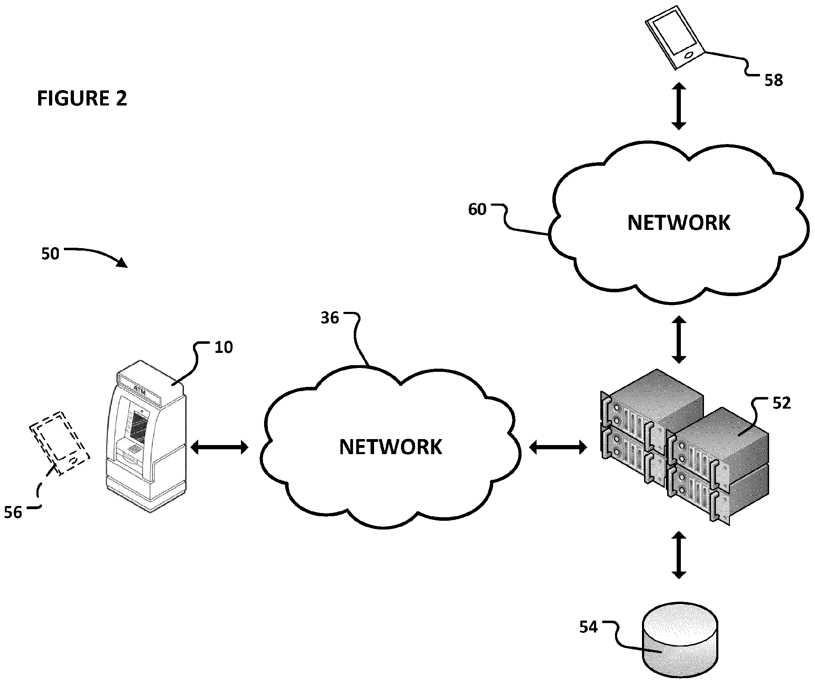

The exemplary ATM 10 also includes a transceiver 38. The exemplary transceiver 38 is configured to facilitate communication between at least one of the encryption module 18 and the computing device 12 and other computing devices that are distinct from and physically proximate to the ATM 10. An example of such a proximate computing device is a smartphone (a mobile computing device) possessed by the user, referenced at 56 in Figure 2. The dashed connection lines in Figure 1 represent optional interconnections. The exemplary transceiver 38 can place the user's smartphone in communication with the encryption module 18, the computing device 12, or both. The exemplary transceiver 38 can implement various communication protocols. For example, the transceiver 38 can be a Near Field Communication (NFC) device. Alternatively, the transceiver 38 can be a Bluetooth beacon. The transceiver 38 can transmit and receive data and requests for input generated by the encryption module 18 and/or the computing device 12, such transmissions occurring with the user's smart phone for example.

The exemplary ATM 10 also includes a currency dispenser 40. The currency dispenser 40 can dispense banknotes, such as currency. The currency dispenser 40 can include gears, shafts, belts, rollers, plates, motors, and other structures commonly applied in currency dispensers. The exemplary currency dispenser 40 is shown positioned primarily in a safe 42, but a currency dispenser applied in one or more embodiments of the present disclosure can include components in the safe 42 and in the upper portion or head of the ATM 10. One or more cassettes or cash boxes 44 are also positioned and protected in the safe 42. Banknotes are stored in the cassettes 44 for disbursement to a user of the ATM 10. Banknotes received from the customer can be stored in one or more of the cassettes. The exemplary currency dispenser 40 can extract the banknotes from one or more of the cassettes 44 and direct them out of the ATM 10 through the slot 28. The exemplary currency dispenser 40 thus communicates with the slot 28 in parallel with the exemplary article exchange unit 26. The exemplary currency dispenser 40 can communicate with and be controlled by the computing device 12 for at least some operations. Each of the cassettes 44 can engage the currency dispenser 40 through a rack whereby the positioning of the cassettes is controlled. Further, each of the cassettes 44 and the currency dispenser 40 can include mating connectors of any form, whereby a positive interconnection is confirmed electronically. When one or more of the cassettes 44 and the currency dispenser 40 are not properly interconnected, a signal or lack thereof can be communicated to the computing device 12 whereby an error message is generated or the ATM 10 can be disabled.

The exemplary ATM 10 also includes a scanner 48. The scanner 48 can scan, for example, at least a portion of a display of a smart phone and communicate the scanned display to the computing device 12. A token can be displayed on the display of the smart phone and thus scanned by the scanner 48. The token can be a bar code, a quick response (QR) code, a number, a string of alphanumeric characters, a weblink, or some other symbolic indicia or biometric data. The exemplary scanner 48 is configured to transmit any scanned data to the computing device 12, which can direct the scanned away from the ATM 10 during completion of a financial transaction.

Figure 2 is a functional block diagram of an exemplary financial transaction processing system 50 according to one or more implementations of the present disclosure. The exemplary system 50 includes the ATM 10. The exemplary system 10 also includes a computing device 52, which is a server computing device in the exemplary embodiment of the present disclosure. The computing device 52 can be a banking core and can access a memory in the form of a database 54 of accounts maintaining by a financial institution. The exemplary computing device 52 has one or more processors and a non-transitory, computer readable medium. The system 50 can be operated by a financial institution and the user can be an account holder of the financial institution. Other implementations of the present disclosure, by way of example and not limitation, can be a system operated by a merchant of consumer goods, a provider of healthcare-related products, or a delivery company.

The ATM 10 and the computing device 52 can communicate over the network 36. Transmissions over the network 36 may be encrypted and may include Message Authentication Codes (MACs) to enhance security. MACs can be appended to messages sent from and received by a device such as the ATM 10. MACs verify that the messages sent and the messages received are identical and also confirm that messages originate from an approved source. The computing devices 12 and 52 can also apply Transport Layer Security (TLS) or Secure Sockets Layer (SSL) protocols and include respective firewalls to enhance security. The computing device 52 can also communicate with user computing devices, such as a user's tablet computer 58, over a network 60. The network 60 can be a local area network (LAN), a wide area network (WAN) such as the Internet, a Multi-protocol label switching (MPLS) network, a cellular network such as operated by cellular phone companies, a financial network, or any combination thereof.

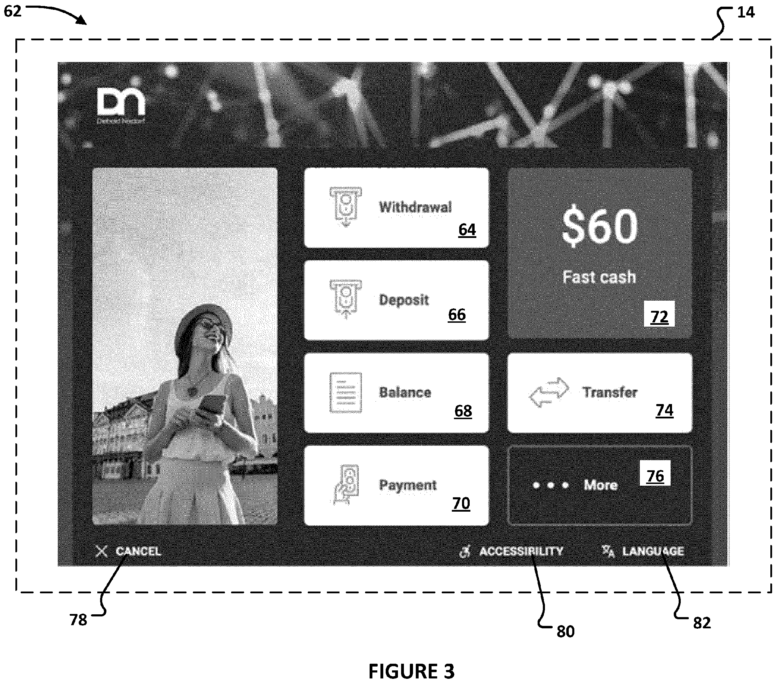

Figure 3 is a first screen 62 of indicia presented to a user of an ATM 10 through the display 14 of the ATM 10 during the execution of a first financial transaction. It is noted that in this exemplary embodiment, the first screen 62 is presented to the user after the user has entered his/her PIN. The exemplary first screen 62 includes ten "buttons." Each button occupies a respective portion of the display. The user can press the portion of the display 14 that displays a button in order to proceed in an interaction with the ATM 10. An exemplary button 64 can be selected by pressing the portion of the display 14 that displays the exemplary button 64 in order to proceed with a cash withdrawal from the ATM 10. An exemplary button 66 can be selected by pressing the portion of the display 14 that displays the exemplary button 66 in order to proceed with a cash deposit to the ATM 10. An exemplary button 68 can be selected by pressing the portion of the display 14 that displays the exemplary button 68 in order to proceed with a receive an indication of the user's account balance from the ATM 10. An exemplary button 70 can be selected by pressing the portion of the display 14 that displays the exemplary button 70 in order to proceed with the submission of a payment through the ATM 10 for some amount owed. An exemplary button 72 can be selected by pressing the portion of the display 14 that displays the exemplary button 72 in order to proceed with a cash withdrawal of sixty dollars from the ATM 10. An exemplary button 74 can be selected by pressing the portion of the display 14 that displays the exemplary button 74 in order to proceed with a transfer of funds from one of the user's accounts to another account, within the same financial institution or an account held by another financial institution. An exemplary button 76 can be selected by pressing the portion of the display 14 that displays the exemplary button 76 in order to request that the ATM 10 present additional options to the user.

An exemplary button 78 takes the form of text "x cancel" and can be selected by pressing the portion of the display 14 that displays the exemplary button 78 in order to cease interaction with the ATM 10. An exemplary button 80 takes the form of text "accessibility" and can be selected by pressing the portion of the display 14 that displays the exemplary button 80 in order for the ATM 10 to provide accommodations, to the extent possible, to assist the user in completing the interaction with the ATM 10. An exemplary button 82 takes the form of text "language" and can be selected by pressing the portion of the display 14 that displays the exemplary button 82 in order for indicia to be presented by the ATM 10 in a language other than the then-presented language, in the example, a language other than English.

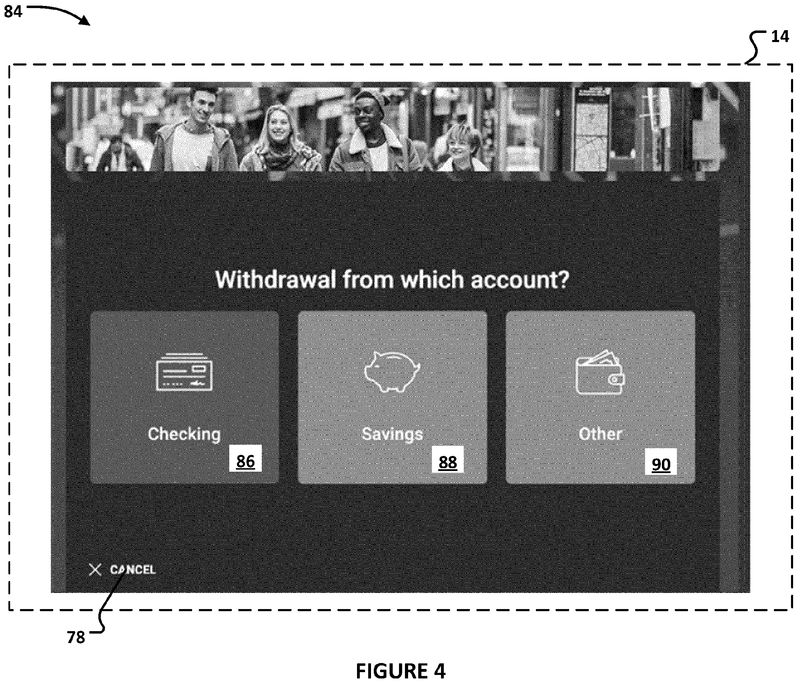

Figure 4 is a second screen 84 of indicia presented to the user of the ATM 10 through the display 14 of the ATM 10 during the execution of the first financial transaction after the user has entered data to the ATM 10 when the first screen 62 shown in Figure 3 is being presented. In the exemplary embodiment, the exemplary data entered was the selection of button 64, to withdraw cash from the user's account through the ATM 10. The exemplary second screen 84 includes four buttons. An exemplary button 86 can be selected by pressing the portion of the display 14 that displays the exemplary button 86 in order to proceed with a cash withdrawal from the user's checking account. An exemplary button 88 can be selected by pressing the portion of the display 14 that displays the exemplary button 88 in order to proceed with a cash withdrawal from the user's saving account. An exemplary button 90 can be selected by pressing the portion of the display 14 that displays the exemplary button 90 in order to proceed with a cash withdrawal from an account other than the user's checking and savings accounts. The exemplary button 78 is also displayed on the second screen 84.

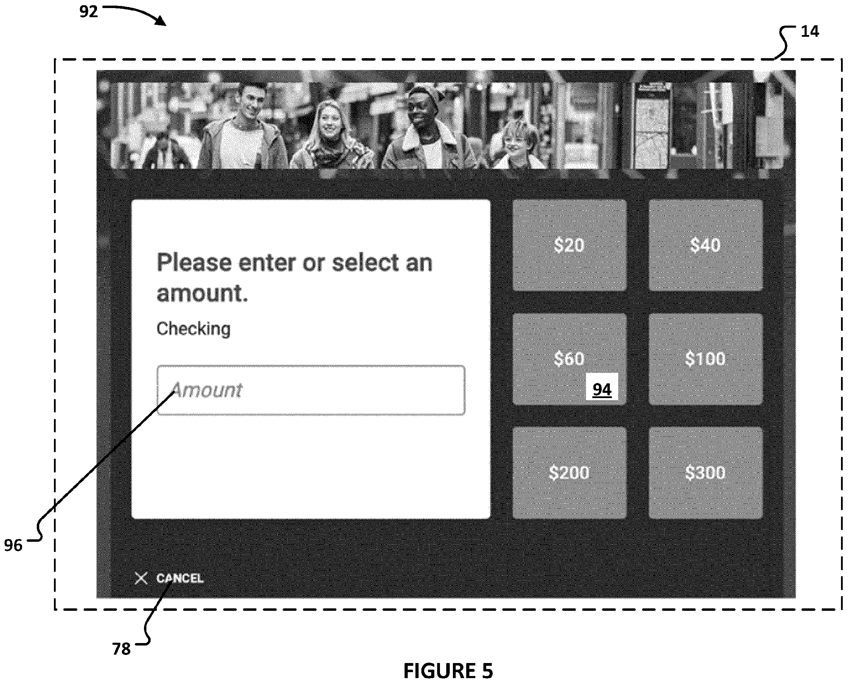

Figure 5 is a third screen 92 of indicia presented to the user of the ATM 10 through the display 14 of the ATM 10 during the execution of the first financial transaction after the user has entered data to the ATM 10 when the second screen 84 shown in Figure 4 is being presented. The data that could have been entered was the selection of any of the buttons 86, 88, 90, but in the exemplary embodiment was the button 86. The exemplary third screen 92 includes six buttons, each associated with a different amount of currency for withdrawal, including an exemplary button 94 associated with a withdrawal of sixty dollars. The exemplary button 78 is also displayed on the third screen 92. The exemplary third screen 92 also displays an open field 96. The user can press the display 14 at the position of the open field 96 and, in response, the display 14 of the ATM 10 can be controlled to display a screen or sub-screen (not shown) for a user to enter a particular amount of currency for withdrawal.

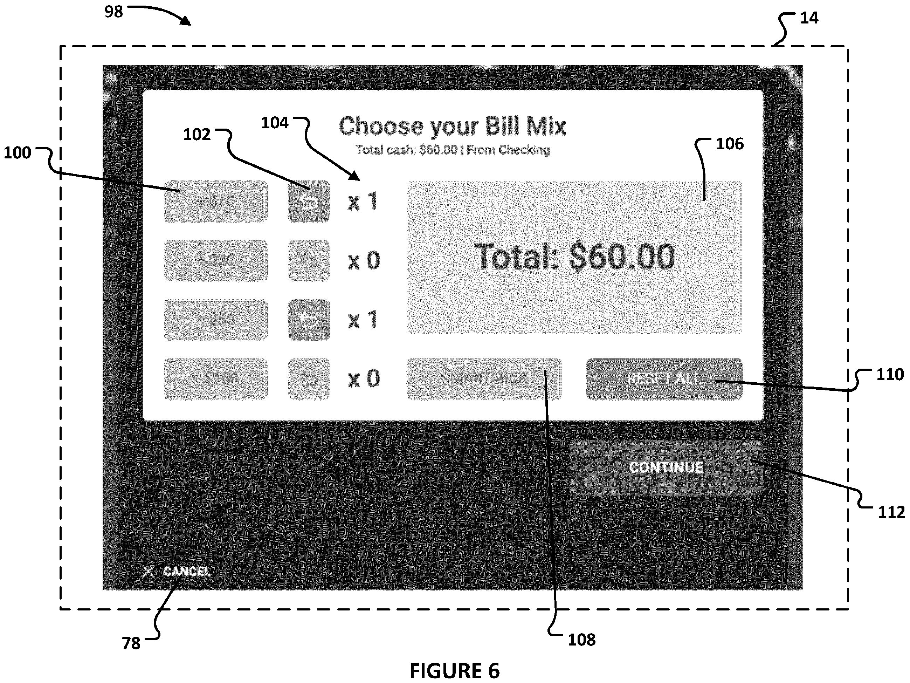

Figure 6 is a fourth screen 98 of indicia presented to the user of the ATM 10 through the display 14 of the ATM 10 during the execution of the first financial transaction after the user has entered data to the ATM 10 when the third screen 92 shown in Figure 5 is being presented. Through the fourth screen 98, the ATM 10 allows a user to choose the set of notes to be dispensed, the number of each note for each denomination (hereafter the "note set"). In the exemplary embodiment, the exemplary data entered was the selection of button 94. The exemplary button 78 is also displayed on the fourth screen 98. The exemplary fourth screen 98 includes buttons such as button 100. When exemplary button 100 is selected by the user, the increments of ten-dollar bills that will be dispensed to the user will be increased. It is noted that the ATM 10 is configured to adjust the increments of bills of other denominations that will be dispensed to the user when the user selects a preference for a particular number of bills of a particular denomination.

The exemplary fourth screen 98 also includes buttons such as button 102 that, when selected, the increments of ten-dollar bills that will be dispensed to the user will be decreased. The exemplary fourth screen 98 also displays the number of bills of each denomination that will be dispensed. As shown in the exemplary embodiment, displayed indicia 104 shows the user that a single ten-dollar bill will be dispensed.

The exemplary fourth screen 98 also includes a field with displayed indicia 106 that advises the user of the value of the currency that will be dispensed. The exemplary fourth screen 98 also includes buttons such as button 108 that, when selected, will result in the ATM 10 presenting a recommendation to the user, through the display 14, of the number of each denomination to include in the dispensation of currency. The exemplary fourth screen 98 also includes buttons such as button 110 that, when selected, will result in the current selection of the number of each denomination to be struck or deleted so that the user can begin anew the selection of currency for the dispensation. The exemplary fourth screen 98 also includes buttons such as button 112 that, when selected, communicate to the ATM 10 that the current selection of the number of each denomination is acceptable and that the process should continue.

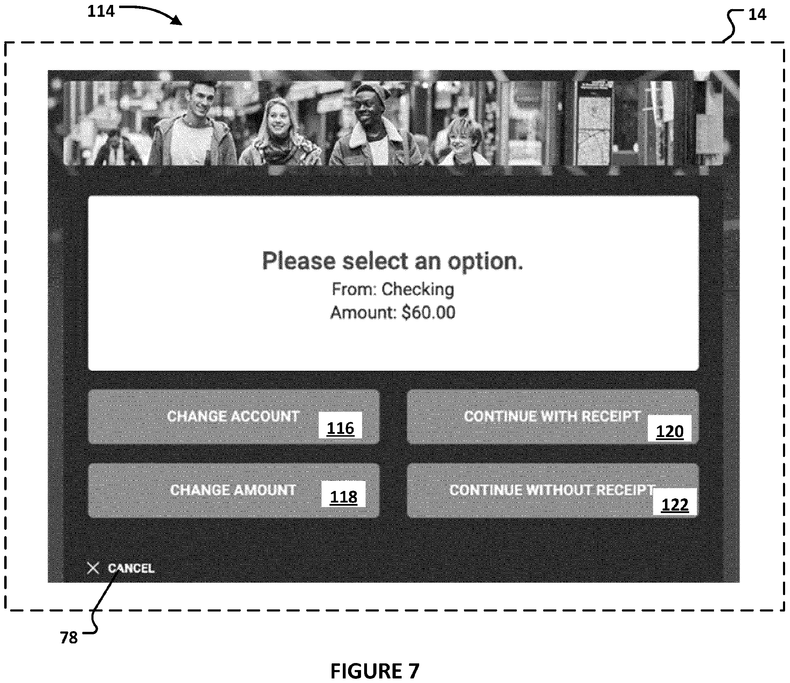

Figure 7 is a fifth screen 114 of indicia presented to the user of the ATM 10 through the display 14 of the ATM 10 during the execution of the first financial transaction after the user has entered data to the ATM 10 when the fourth screen 98 shown in Figure 6 is being presented. In the exemplary embodiment, the exemplary data entered was the selection of button 112. The exemplary fifth screen 114 includes four buttons. The fifth screen 114 confirms the details of the transaction and presents options to the user through the buttons. Exemplary button 116 allows the user to change the account associated with the current transaction, exemplary button 118 allows the user to change the currency amount associated with the current transaction, exemplary button 120 allows the user to proceed and receive a receipt at the end of the transaction, and exemplary button 122 allows the user to proceed without receiving a receipt at the end of the transaction. The exemplary button 78 is also displayed on the fifth screen 114.

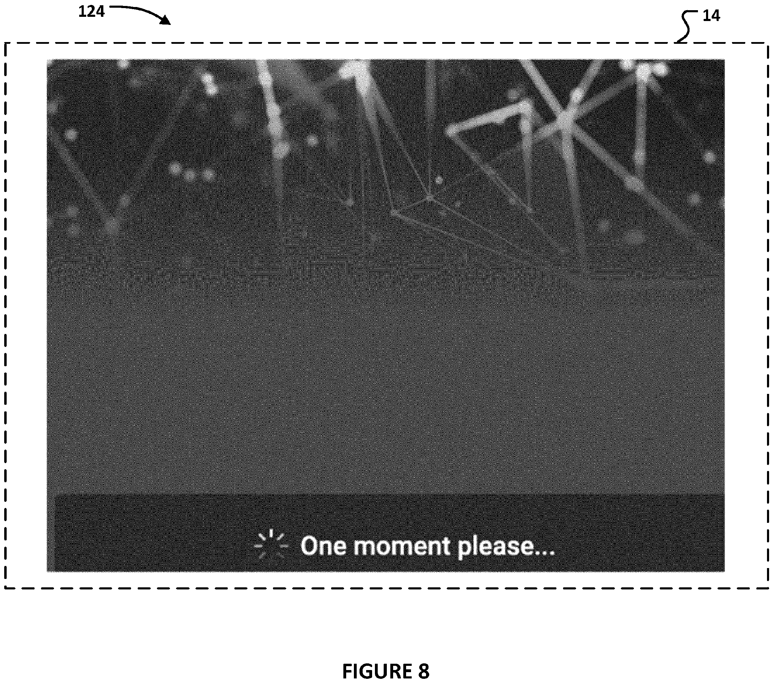

Figure 8 is a sixth screen 124 of indicia presented to the user of the ATM 10 through the display 14 of the ATM 10 during the execution of the first financial transaction after the user has entered data to the ATM 10 when the fifth screen 114 shown in Figure 7 is being presented to advise the user that the ATM 10 is processing the requested transaction. In the exemplary embodiment, the exemplary data entered was the selection of button 120 or the button 122.

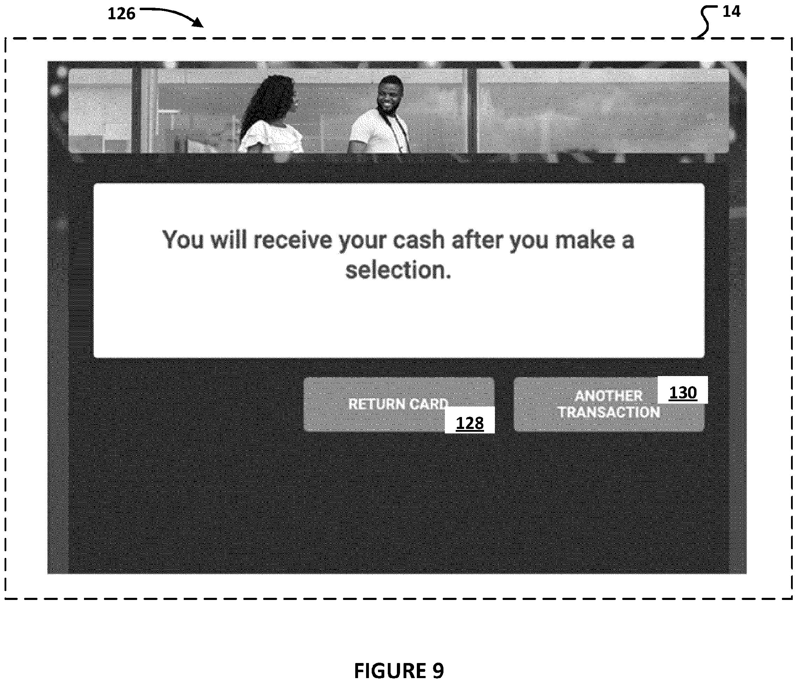

Figure 9 is a seventh screen 126 of indicia presented to the user of the ATM 10 through the display 14 of the ATM 10 during the execution of the first financial transaction after the ATM 10 has completed processing associated with the sixth screen 124 shown in Figure 8 and is ready to complete the requested transaction. The exemplary seventh screen 126 includes two buttons. Exemplary button 128 allows the user to receive his/her card back from the ATM 10 after the current transaction is completed and exemplary button 130 allows the user to proceed to another transaction after the current transaction is completed.

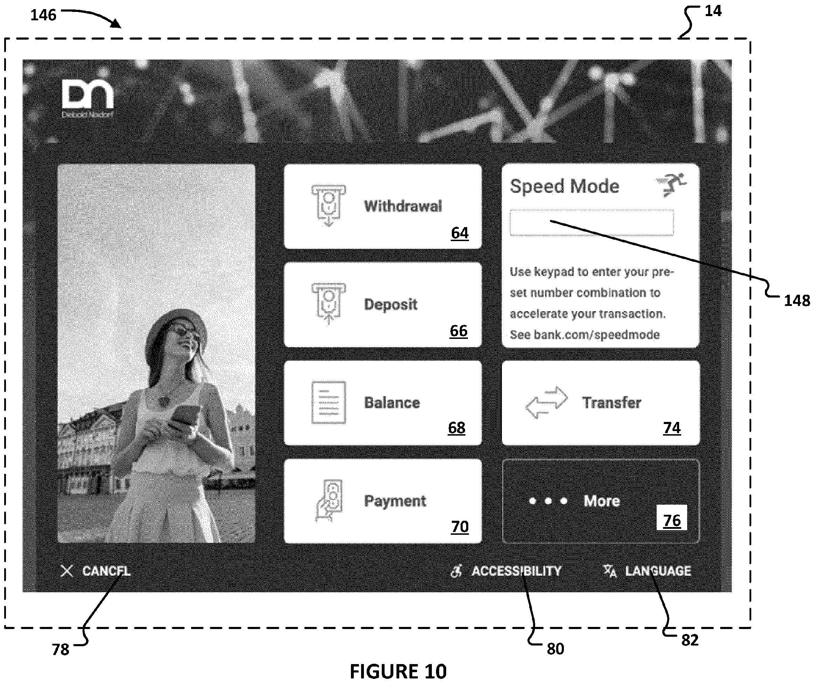

Figures 10 - 12 are screens of indicia displayed in the embodiment of the present disclosure. In one or more embodiments of the present disclosure, the system 50 and the ATM 10 can operate such that a user holding an account can create and repeatedly execute a transaction function that is selectively/variably definable. A transaction function is a relation between one or more inputs and an output. The inputs can be entered once, assigned or designated a name, and the output can occur as a consequence of the user entering the name at an ATM.

In one or more exemplary embodiments, the one or more inputs of a transaction function can include, by way of example and not limitation, (i) an amount associated with the transaction, (ii) an account associated with the transaction, (iii) the notes set, and (iv) whether or not a receipt is to be dispensed at the end of the transaction. The "notes set" is the number of bills of each particular denomination that will be dispensed. The user can communicate with the server 52 over the network 36 to assign values for each input for a particular transaction function. The user can also communicate with the server 52 over the network 36 to assign the name or designation to the transaction function. The Figures 10 - 12 shows screens that can be displayed by the ATM 10 after at least one such transaction function is established.

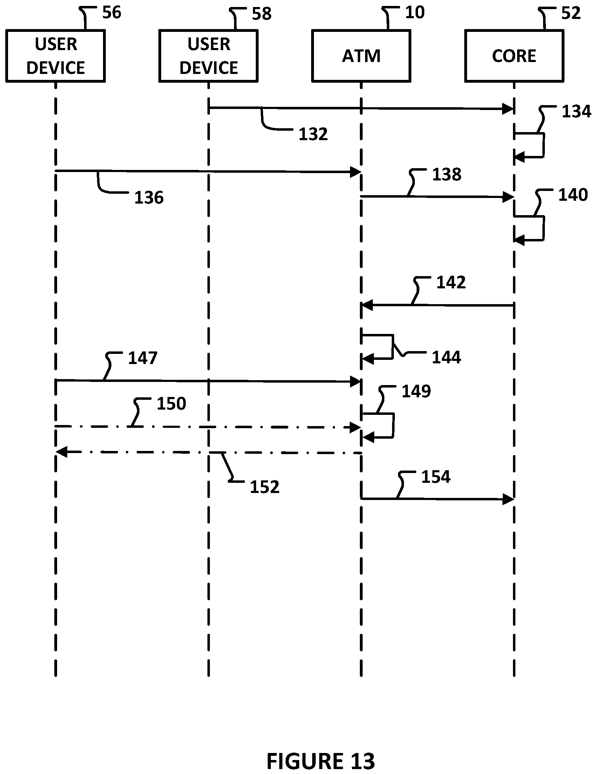

An example of the creation of a variably definable transaction function will now be disclosed. With reference to Figure 13, at action 132, a user can use the computing device 58 to communicate with the server 52 over the network 36. Figure 13 is a simplified activity or "swim lanes" diagram according to one or more implementations of the present disclosure. During action 132, the user can communicate the one or more inputs, the output, and the name that defines an exemplary first transaction function. In the first exemplary transaction function, the transaction function will be a withdrawal of currency, from the user's savings account. In addition to these two inputs, in the first exemplary transaction function, the transaction function is further defined by the input that the ATM 10 will dispense twenty dollars and the input that the ATM 10 will not output a receipt. The user can choose to leave the first exemplary transaction function undefined as to other aspects of the transaction. For example, the user can leave undefined the note set (number of ten and or five dollar bills, for example). For undefined aspects, the server 52 can be configured to prompt the user to make a selection when the transaction function is being defined and finalized, or can be configured to assume a selection that minimizes processing operations and ATM power consumption and/or enhances transaction security, or can be configured to alert the user during the creation of the transaction function that the user will be prompted to provide a selection when the transaction function is being executed at the ATM 10. The output of the first exemplary transaction function is a dispense command, generated by the server 52, transmitted to the ATM 10, directing the ATM 10 to dispense twenty dollars and not output a receipt.

It is noted that the server 52 can generate graphical user interface(s) on the computing device 58 to guide the user in entering the one or more inputs before the transmission of the data at action 132.

As set forth above, the server 52 can also be configured to permit the user to name (or designate a number or alphanumeric code) a transaction function defined by the user. The present disclosure is not limited to a naming convention limited to names having only numbers. The server 52 can be configured to permit the user to name a transaction function, by way of example and not limitation, "1111" or "fav" or "20cash" or "20" or some other name/designation. If a user forgets the name of a transaction function, the user can create the same transaction function again. The server 52 can be configured to compare transaction functions being created against previously-created transaction functions and delete any previously-created transaction function that is the same as transaction function being created.

Subsequent to action 132, at action 134, the server 52 stores the exemplary first transaction function in the database 54. Subsequent to action 134, at action 136, the user arrives at the ATM 10 to execute the exemplary first transaction function and inserts his/her card in the card reader 22 and enters a PIN to the key pad 16, or transmits a token to the ATM 10 wirelessly from the mobile computing device 56 to the ATM 10 through the transceiver 38, or presents a token on the display of the mobile computing device 56 to the scanner 48, or in some other way presents authentication data to the ATM 10. In one or more embodiments of the present disclosure, the user can also input, at 136, the name of a transaction function that has been created to the ATM 10, directly on the touch display 14, the keypad of the ATM 10, or wireless with the user device 56. In such embodiments, the ATM 10 can include the name of the transaction function at 138.

At action 138, the ATM 10 transmits at least part of the authentication data received from the user to the server 52, to gain approval to execute a transaction.

At action 140, the server 52 accesses and searches the database 54 and, based on the authentication data submitted by the user, retrieves details of the user's account and also any stored variably definable transaction function, including the first exemplary transaction function designated 22201. At action 142, the server 52 transmits limits for an approvable transaction to be entered by the user as well as the already-approved variably definable transaction function(s), including the first exemplary transaction function designated 22201. In embodiments in which the name of the transaction function was transmitted to the server 52 at 138, the server 52 can merely confirm that the user's account has sufficient funds at 140 and, at 142, transmit a command to the ATM 10 to disburse the currency notes defined by the transaction function.

At action 144, the computing device 12 of the ATM 10 controls the display 14 of the ATM 10 to display a screen of indicia (the eighth exemplary screen mentioned herein) to facilitate the entry of data by the user. Referring now to Figure 10, an eighth screen 146 of indicia is substantially similar to the first screen 62 shown in Figure 3. The first screen 62 and the eighth screen 146 differ in that the eighth screen 146 does not include a button 72 but includes an open field 148 for the user to enter the designation/name of a variably definable transaction function. The designation can be input to the open field 148 and the user can press an "enter" button on the keypad 16 or the ATM 10 can be configured such that the area surrounding the open field 148 is a button the user can press. In the exemplary embodiment detailed in the preceding paragraphs, if the user inputs 22201, the display 14 will present the sixth and seventh screens 124, 126, the currency dispenser 40 will dispense twenty dollars, and no receipt will be output from the printer module 24. Thus, the process steps associated with the screens 84, 92, 98, 114 are all omitted.

It is noted that variably definable transaction function is widely customizable. The functionality resulting from pressing a "fast cash" button, such as button 72 in Figure 3, only eliminates a single step of the transaction, specifically processing associated with the screen 92 in Figure 5. But the user must still choose an account, the note set, and whether or not a receipt is to be output by the ATM 10. Further, a fast cash button can be customized by users.

It is also noted that the variably definable transaction function disclosed herein is not a pre-staged transaction. In the relevant art, the term "pre-staged" as an adjective modifying the term "transaction" refers to a user, account holder communicating with a bank core before visiting an ATM and defining the following elements of a transaction: (i) the amount of currency to be dispensed and (ii) the account from which the currency will be drawn. A pre-staged transaction is a single transaction.

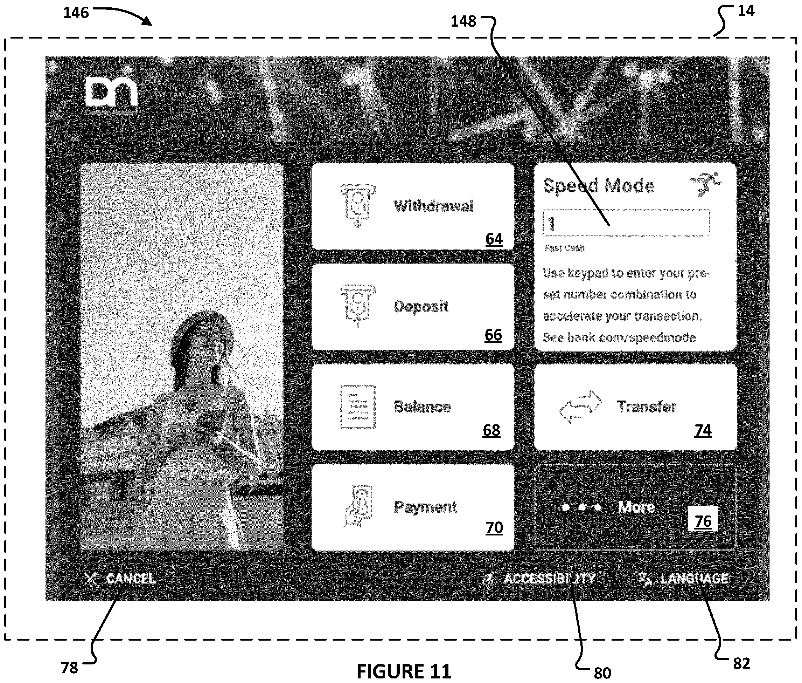

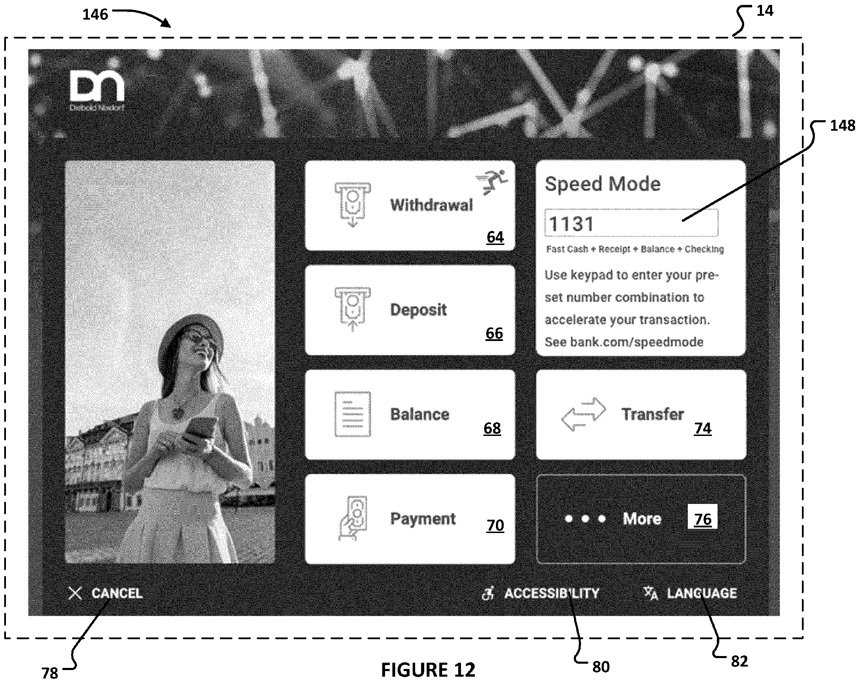

Figures 11 and 12 show another feature that can be applied in one or more embodiments of the present disclosure, specifically assisting the user in recalling the designation of a variably definable transaction function. Figure 11 is a first updated version of the screen 146 shown in Figure 10 after the user has entered data to the ATM. Figure 12 is a second updated version of the screen 146 shown in Figure 11 after the user has entered additional data to the ATM. In Figure 11, the user has entered the number one in the field 148. In response, the computing device 12 controls the display 14 such that the screen 146 displays, under the field 148, the words "fast cash" to indicate that the transaction will be a cash withdrawal. In Figure 12, the user has entered additional digits one, three and one. In response, the computing device 12 controls the display 14 such that the screen 146 additionally displays, under the field 148, the words "receipt," "balance," and "checking." These words indicate to the user that a receipt will be output, the account balance will be shown, and the account being drawn upon will be the user's checking account. Thus, the user can see what will transpire based on a particular input. Further, the user can delete input digits and enter different digits as necessary to accomplish the desired transaction function.

In the first example set forth above, the variably definable transaction function will cause a withdrawal to occur at the ATM 10, the draw will be made from the user's savings account, the ATM 10 will dispense twenty dollars, and the ATM will not output a receipt. Further, in the first example set forth above, the variably definable transaction function was designated by the string of numbers 22201. Each digit corresponded to a particular input of the input set and two digits corresponded to a single input. To execute the first variably definable transaction function, the user would enter 22201 in a field displayed by the display 14 of the ATM 10.

In one or more other embodiments of the invention, the naming convention and mode of entry at the ATM 10 can be different. The server 52 and ATM 10 can be configured such that the user can name a variably definable transaction function with a single number or letter or a string of alphabetic or alpha-numeric text. For example, a user can designate the first exemplary variably definable transaction function simply as the number 1 or the number 1111. Alternatively, a user can designate the first exemplary variably definable transaction function as "20 from savings."

In another feature that can be included in one or more embodiments of the present disclosure, the designation of one or more variably definable transaction function(s) can be presented to the user at the ATM 10 as buttons that are displayed on the display 14. For example, the screen 62 or 146 can include a button that includes the text "20 from savings" (the name the user has assigned to a transaction function) that the user can select. The user can thus select a button rather than entering text with the key pad to an open field.

In another feature that can be included in one or more embodiments of the present disclosure, particular alpha-numeric characters, such as a zero or the number nine, can be used to indicate a variable to be decided at the ATM. In an example above, a transaction function designated 22201 would be interpreted by the ATM 10 as a withdraw by the first "2," the relevant account by the second "2," the amount of the transaction by the third "2" and the following "0," and no receipt to be output by the ending "1." The lack of a digit after the ending "1" would indicate to the ATM 10 that the user has no preference regarding the note set. In one or more embodiments of the present disclosure, when a user has no preference regarding one input of the input set of a transaction function, such as the note set in the first exemplary variably definable transaction function, the ATM 10 can be configured to select an option for that input rather than presenting the user with a screen to solicit input from the user to minimize the time required to complete the transaction. In or more embodiments of the present disclosure, a "0" or "9" following the "1" could also indicate to the ATM 10 that the user has no preference regarding the note set.

In another feature that can be included in one or more embodiments of the present disclosure, the ATM 10 can be configured such that a leading digit, entered in the field 148 can indicate to the ATM 10 that the designation or name of a preset transaction function will be entered next. For example, the field 148 can be a more general field for entering more than one kind of data. By entering a "9," for example, the user indicates to the ATM 10 that subsequent digits will be the designation or name of a preset transaction function.

Referring again to Figure 13, the user enters the designation of the transaction function to the ATM 10 at action 147. At action 149, the ATM 10 executes the transaction based on the designation of the transaction function received from the user. Actions 150 and 152 represent alternative transaction functions that might occur; action 150 represents the deposit of currency and action 152 represents the dispensation of currency. Action 154 represents the ATM 10 reporting completion of the transaction to the bank core server 52 so that the transaction can be recorded against the appropriate account.

Thus, as disclosed above, a method is disclosed herein of operating the financial transaction processing system 50. The exemplary method includes receiving 132, at the exemplary server computing device 52 of the financial transaction processing system 50, a definition of at least one transaction function from a user that is physically remote from the exemplary server computing device 52. The exemplary transaction function includes at least (i) an account associated with a financial transaction and (ii) an amount associated with the financial transaction and (iii) an alphanumeric designation of the at least one transaction function. The user can thus define a transaction function and that definition can be communicated to the exemplary exemplary server computing device 52. A definition of a transaction function can include a plurality of elements. The account, the amount, and the alphanumeric designation are three such elements. All transaction functions need not include all of the same elements. Some elements that can be included in the definition may not be chosen by the user, such as the element of whether or not the ATM 10 is to print a paper receipt after the transaction function has been executed. It can be desirable for user to at least assign elements of the definition including the account against which the financial transaction will be applied, the amount of currency to be involved in the financial transaction, and a name or code that the user can remember when initiating the financial transaction. The name or code can be alphanumeric designation, including numbers, letters, and/or text symbols such as punctuation characters or any other character selectable on a physical or visually-presented keyboard.

The exemplary method includes storing 134, in the exemplary memory 54 of the financial transaction processing system 50, by the exemplary server computing device 52, the definition of the at least one transaction function. The exemplary server computing device 52 will also receive all of the elements of the definition the transaction function that have been assigned by the user. All of the elements will be correlated together when stored in exemplary memory 54.

The exemplary method also includes receiving 138, at the exemplary server computing device 52, from the exemplary ATM 10 of the financial transaction processing system 50, the alphanumeric designation of the at least one transaction function. The exemplary method also includes retrieving 140, from the exemplary memory 54 of the financial transaction processing system 50, with the exemplary server computing device 52, the at least one transaction function in response to the receiving the alphanumeric designation. In retrieving the transaction function from exemplary memory 54, the exemplary server computing device 52 can retrieve all of the elements of the definition of the transaction function based only on the alphanumeric designation of the transaction function.

The exemplary method also includes transmitting 142, with the exemplary server computing device 52, to the exemplary ATM 10, an output. The exemplary output is a command correlated at least in part to the definition of the transaction function. The exemplary output directs the exemplary ATM 10 to dispense the amount associated with the financial transaction. The exemplary output transmitted at 142 is at least in part correlated in that the exemplary output may also include elements that were not defined by the user in the transaction function. By way of example and not limitation, if the user does not indicate whether a receipt should be printed when the transaction or if the receipt should show a current balance, the exemplary output transmitted at 142 may or may not dictate these elements of the transaction.

The exemplary method also includes executing 149 the command that is output at 142 with the exemplary ATM 10. Executing the command at 149 can be defined by dispensing 152, with the exemplary ATM 10, the amount associated with the financial transaction in response the receiving the command at 142 and without the user indicating the amount of currency to the exemplary ATM 10. Thus, the user can merely enter the alphanumeric designation to the ATM 10 for the transaction function to be executed.

The exemplary method can include receiving, with the exemplary ATM 10, authentication data associated with the user one of prior to the receiving the alphanumeric designation of the at least one transaction function at the exemplary server computing device 52. For example, the ATM 10 can read a card of the user and receive a pin from the user with components of the ATM 10 disclosed above. Alternatively, in one or more embodiments of the present disclosure, authentication data can be received wireless from the user's smartphone 56. The authentication data can be transmitted by the exemplary ATM 10 to the exemplary server computing device 52 before action 138 or can be transmitted with the the alphanumeric designation at action 138. The exemplary server computing device 52 can thus receive, from the exemplary ATM 10, the alphanumeric designation of the transaction function and the authentication data.

The exemplary method also includes comparing, with the exemplary server computing device 52, after the retrieving at 140, the amount associated with the financial transaction and the account associated with the financial transaction. The comparing can be executed prior to the transmitting at 142 of the output to the exemplary ATM 10. By way of example and not limitation, the user may have depleted the account prior to action 136 such that the amount associated with the financial transaction exceeds the balance in the account associated with the financial transaction. If so, the transmitting at 142 can be canceled. If not, the transmitting at 142 can be executed. Thus, the transmitting at 142 in the exemplary method is responsive in part to the comparing.

The exemplary method can also include soliciting, with the exemplary ATM 10, the authentication data and the alphanumeric designation of the at least one transaction function from the user prior to the receiving, at 138, the alphanumeric designation of the at least one transaction function at the exemplary server computing device 52. In one example, the exemplary ATM 10 can receive a user's card and then display a screen with two fields for the user to enter respective items of data: the user's pin and the alphanumeric designation of a transaction function that the user created and stored with the exemplary server computing device 52. Those two items can be the only data solicited by the ATM 10 in one or more embodiments of the present disclosure. Upon receiving the two items of data, the ATM 10 can proceed and execute action 138 to transmit both items of data to the exemplary server computing device 52. It is noted that, in one or more embodiments of the present disclosure, an app operating on the user's smartphone 56 could operate such that a display is presented on a screen of the user's smartphone 56 with the two fields for the user to enter two items of data. The app can be further configured to transmit the two items of data to the ATM 10 and the ATM 10 can proceed and execute action 138 to transmit both items of data to the exemplary server computing device 52. In such embodiments, the executing at 149 can be executed after the soliciting and without the ATM 10 or the server computing device 52 receiving other information from the user, such as the amount of currency to be dispensed. In a variation of the method, the two items of data can be solicited sequentially rather than concurrently.

In another approach, the exemplary method can include soliciting authentication data from the user prior to soliciting and to receiving the alphanumeric designation of a transaction function.

In one or more embodiments of the present disclosure, prior to executing at 149, the exemplary ATM 10 can be configured to solicit further information not designated by the user as an element of the definition of the transaction function. By way of example and not limitation, the exemplary ATM 10 can be configured to solicit from the user whether a receipt is desired, whether a current balance is desired, and/or whether a particular number of notes of a particular denomination is desired.

In another approach, the exemplary method can include displaying, by the exemplary ATM 10 on the display 14, a display screen including a plurality of graphical user interface elements each representing one of a plurality of transactions. One of the plurality of graphical user interface elements can permit entry of the alphanumeric designation of a transaction function. By way of example and not limitation, a graphical user interface element can be defined by a button, a pull-down menu, or a field to enter text. Figure 10 shows such a screen.

The examples set forth above provides technical benefits of reduced operations in the discreet transaction, which in turn reduce energy consumption and enhance security, as well as increases the speed of completing a transaction, freeing the ATM to be engaged by other users. These benefits also lead to further benefits. Specifically, increases the speed of completing a transaction necessarily increases the number of transactions that can be processed. Other embodiments of the present disclosure can produce one or more of these technical improvements.

What has been described above includes examples of the subject innovation. It is, of course, not possible to describe every conceivable combination of components or methodologies for purposes of describing the disclosed subject matter, but many further combinations and permutations of the subject innovation are possible. The use of any and all examples, or exemplary language (e.g., "such as") provided herein is intended merely to be illustrative and does not pose a limitation on the scope of any innovation disclosed herein unless otherwise claimed. The word "exemplary" is used to mean serving as an example, instance, or illustration. Any aspect or design described herein as "exemplary" is not necessarily to be construed as preferred or advantageous over other aspects or designs. Rather, use of the word "exemplary" is intended to present concepts in a concrete fashion. Further, any statements set forth within the Detailed Description of this document and addressing a prior art device(s) are the observations of the inventors and such statements themselves are not prior art or admissions as to what is prior art.

As used herein, the singular forms "a," "an," and "the" include plural referents unless the context clearly dictates otherwise. Unless indicated otherwise by context, the term "or" is to be understood as an inclusive "or." Terms such as "first", "second", "third", etc. when used to describe multiple devices or elements, are so used only to convey the relative actions, positioning and/or functions of the separate devices, and do not necessitate either a specific order for such devices or elements, or any specific quantity or ranking of such devices or elements. Use of the terms "about" or "approximately" are intended to cover values that are above and/or below a stated value or range, or within manufacturing tolerances, as would be understood by one having ordinary skill in the art in the respective context. In some instances, this may encompass values in a range of approx. +/-10%; in other instances there may be encompassed values in a range of approx. +/-5%; in yet other instances values in a range of approx. +/-2% may be encompassed; and in yet further instances, this may encompass values in a range of approx. +/-1%.

It will be understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof, unless indicated herein or otherwise clearly contradicted by context. Recitations of a value range herein, unless indicated otherwise, serves as a shorthand for referring individually to each separate value falling within the stated range, including the endpoints of the range, each separate value within the range, and all intermediate ranges subsumed by the overall range, with each incorporated into the specification as if individually recited herein. Unless indicated otherwise, or clearly contradicted by context, methods described herein can be performed with the individual steps executed in any suitable order, including: the precise order disclosed, without any intermediate steps or with one or more further steps interposed between the disclosed steps; with the disclosed steps performed in an order other than the exact order disclosed; with one or more steps performed simultaneously; and with one or more disclosed steps omitted, unless expressly contradicted by the text herein or context.

While the present disclosure has been described with reference to one or more exemplary embodiments, it is to be understood that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to a particular embodiment disclosed herein as the best mode contemplated for carrying out this present disclosure, but that the present disclosure will be viewed as covering any embodiment falling within the scope of the appended claims. Various aspects or features described herein may be implemented as a method, apparatus, or article of manufacture using standard programming and/or engineering techniques.

Also, the right to claim for patent coverage a particular sub-feature, a sub-component, or a sub-element of any disclosed embodiment, singularly or in one or more sub-combinations with any other sub-feature(s), sub-component(s), or sub-element(s), is hereby unconditionally reserved by the Applicant. Also, particular sub-feature(s), sub-component(s), and sub-element(s) of one embodiment that is disclosed herein can replace particular sub-features, sub-components, and sub-elements of another embodiment disclosed herein or can supplement and be added to another embodiment unless expressly indicated otherwise by the drawings or this specification. The inventor also asserts that any of the claims set forth after this detailed description can be combined with any other claim or claims regardless of whether or not there is a direct line of dependency, unless there is an express indication in this text or the drawings unambiguously indicating that such a combination is not possible. The order of the claims and the lines of dependency are irrelevant to the various ways that the features, elements, sub-elements, components, sub-components, etc. of the present disclosure can be combined and thus claimed. Further, the use of the word "can" in this document is not an assertion that the subject preceding the word "can" is unimportant or unnecessary or "not critical" relative to anything else in this document. The word "can" is used herein in a positive and affirming sense and no other motive should be presumed. More than one patentable "invention" may be disclosed in the present disclosure and it is noted that an "invention" is defined by the content of a patent claim and not by the content of descriptive text or drawings.

## Claims

1. A method of operating a financial transaction processing system (50) comprising:
receiving (132), at a server computing device (52) of the financial transaction processing system (50), a definition of at least one transaction function from a user that is physically remote from the server computing device (52), the at least one transaction function including at least (i) an account associated with a financial transaction and (ii) an amount associated with the financial transaction and (iii) an alphanumeric designation of the at least one transaction function;
storing (134), in a memory (54) of the financial transaction processing system (50), by the server computing device (52), the definition of the at least one transaction function;
receiving (138), at the server computing device (52), from an automated transaction machine (10) of the financial transaction processing system (50), the alphanumeric designation of the at least one transaction function;
retrieving (140), from the memory (54) of the financial transaction processing system (50), with the server computing device (52), the at least one transaction function in response to said receiving the alphanumeric designation; and
transmitting (142), with the server computing device (52), to the automated transaction machine (10), an output being a command correlated at least in part to the definition of the at least one transaction function and directing the automated transaction machine (10) to dispense the amount associated with the financial transaction.

2. The method of claim 1 further comprising:
executing (149) the command with the automated transaction machine (10).

3. The method of claim 2 wherein said executing (149) further comprises:
dispensing (152), with the automated transaction machine (10), the amount associated with the financial transaction in response said receiving the command and without the user indicating the amount of currency to the automated transaction machine (10).

4. The method of claim 1 further comprising:
receiving, with the automated transaction machine (10), authentication data associated with the user one of prior to said receiving the alphanumeric designation of the at least one transaction function at the server computing device (52).

5. The method of claim 4 wherein said receiving the alphanumeric designation of the at least one transaction function at the server computing device (52) further comprises:
receiving, at the server computing device (52), from the automated transaction machine (10) of the financial transaction processing system (50), the alphanumeric designation of the at least one transaction function and the authentication data.

6. The method of claim 5 further comprising:
comparing, with the server computing device (52), after said retrieving, the amount associated with the financial transaction and the account associated with the financial transaction prior to said transmitting the output to the automated transaction machine (10) with the server computing device (52), wherein said transmitting is responsive in part to said comparing.

7. The method of claim 1 further comprising:
soliciting, with the automated transaction machine (10), authentication data and the alphanumeric designation of the at least one transaction function from the user prior to said receiving the alphanumeric designation of the at least one transaction function at the server computing device (52); and
executing the command with the automated transaction machine (10) after said soliciting and without receiving other information from the user after said receiving the alphanumeric designation of the at least one transaction function at the server computing device (52).

8. The method of claim 7 wherein said soliciting is further defined as:
soliciting, with the automated transaction machine (10), concurrently, the authentication data and the alphanumeric designation of the at least one transaction function from the user prior to said receiving the alphanumeric designation of the at least one transaction function at the server computing device (52).

9. The method of claim 8 wherein said soliciting is further defined as:
soliciting, with the automated transaction machine (10), concurrently through a first screen displayed by a display screen of the automated transaction machine (10), the authentication data and the alphanumeric designation of the at least one transaction function from the user prior to said receiving the alphanumeric designation of the at least one transaction function at the server computing device (52).

10. The method of claim 7 wherein said soliciting is further defined as:
soliciting, with the automated transaction machine (10), only the authentication data and the alphanumeric designation of the at least one transaction function from the user prior to said receiving the alphanumeric designation of the at least one transaction function at the server computing device (52).

11. The method of claim 1 further comprising:
soliciting, with the automated transaction machine (10), authentication data from the user prior to said receiving the alphanumeric designation of the at least one transaction function at the server computing device (52);
receiving, with the automated transaction machine (10), after said soliciting, a confirmation of the authentication data from the server computing device (52);
receiving, with the automated transaction machine (10), after said receiving the authentication data from the server computing device (52), the alphanumeric designation of the at least one transaction function from the user; and
executing the command with the automated transaction machine (10) after said receiving the alphanumeric designation of the at least one transaction function from the user without receiving an amount of currency from the user.

12. The method of claim 11 wherein said executing is further defined as:
executing the command with the automated transaction machine (10) after said receiving the alphanumeric designation of the at least one transaction function from the user without receiving information from the user other than the authentication data and the alphanumeric designation of the at least one transaction function.

13. The method of claim 1 further comprising:
soliciting, with the automated transaction machine (10), authentication data from the user prior to said receiving the alphanumeric designation of the at least one transaction function at the server computing device (52);
receiving, with the automated transaction machine (10), after said soliciting, a confirmation of the authentication data from the server computing device (52); and
displaying, with a display screen of the automated transaction machine (10), in response to said receiving the confirmation, a plurality of graphical user interface elements each representing one of a plurality of transactions, wherein one of the plurality of graphical user interface elements permits entry of the alphanumeric designation of the at least one transaction function.

14. A method of operating a server (52) for performing a financial transaction comprising:
receiving (132) from a user a financial transaction defined by a plurality of variables including at least the nature of the financial transaction, the account against which the financial transaction will be recorded, and the amount of the financial transaction, and an associated alphanumeric designation;
storing (134) the financial transaction and associated alphanumeric designation in memory (54);
subsequent to the storing (134), receiving (138) a request from an automated transaction machine (ATM) (10) to initiate the financial transaction based at least in part on user identifiable data and the associated alphanumeric sequence; and
initiating (142) the financial transaction with the server (52).

15. The method of claim 14 where the financial transaction includes a withdrawal and where the initiating (142) includes sending a dispense authorization to the ATM (10).

16. The method of claim 14 where the financial transaction includes a transfer and where the initiating (142) includes sending funds from the account against which the financial transaction will be recorded, to another account against which the transfer will be credited, the other account included in the plurality of variables received from the user.

17. The method of claim 14 where the financial transaction includes crediting funds to the account against which the financial transaction will be recorded, and the method further including receiving (154) verification from the ATM (10) of a deposit, the amount of the deposit included in the plurality of variables received from the user.

18. A method of operating an automated transaction machine (ATM) (10) for performing a financial transaction comprising:
initiating a user session based upon user identifiable data;
subsequent to the initiating, receiving (136) from the user an alphanumeric sequence;
transmitting (138) the alphanumeric sequence to a server (52) associated with a financial institution; and
receiving (142) from the server (52) confirmation of an association between the alphanumeric sequence and a financial transaction defined by a plurality of variables including at least the nature of the financial transaction, the account against which the financial transaction will be recorded, and the amount of the financial transaction.

19. The method of claim 18 further comprising:
dispensing (152) cash in accordance with the pre-defined financial transaction.

20. The method of claim 18 further comprising:
receiving (150) a deposit in accordance with the pre-defined financial transaction.
